# EUROPEAN PATENT SPECIFICATION

(11) **EP 2 464 890 B1**
(45) Date of publication and mention of the grant of the patent: **19.06.2019**
(21) Application number: 10742602.5
(22) Date of filing: 02.08.2010
(51) Int. Cl.: F16G 5/16, C22C 38/00, C21D 9/00, C23C 8/32, C21D 1/18, C22C 38/02, C22C 38/04, C22C 38/18

(54) **TRANSVERSE ELEMENT FOR A DRIVE BELT AND DRIVE BELT .**
QUERELEMENT FÜR EINEN ANTRIEBSRIEMEN UND ANTRIEBSRIEMEN
ÉLÉMENT TRANSVERSAL POUR UNE COURROIE DE TRANSMISSION ET COURROIE DE TRANSMISSION

(30) Priority: 10.08.2009 NL 1037185
(43) Date of publication of application: 20.06.2012
(73) Proprietor: Robert Bosch GmbH, 70442 Stuttgart (DE)
(72) Inventor: PENNINGS, Bert, NL-5052 CH Goirle (NL); FARAON, Irinel, Cosmin, NL-5056 JL Berkel-Enschot (NL)
(74) Representative: Plevier, Gabriël Anton Johan Maria
(86) International application number: PCT/NL2010/000119
(87) International publication number: WO 2011/019270

(56) References cited:
- EP-A1- 1 489 318
- WO-A1-2009/084946
- JP-A- 2004 169 848
- JP-A- 2004 315 875
- JP-A- 2007 262 449
- JP-A- 2009 068 609
- US-A- 4 191 599

## Description

The present invention relates to a steel transverse element component of a drive belt for use in a continuously variable transmission according to the preamble of the following claim 1. This drive belt and transmission are well known in the art, for example from the European patents EP-A-0 626 526 and EP-A-1 167 829 respectively.

The known drive belt comprises a number of such transverse elements that are slidingly included therein relative to the circumference of a self-contained or endless tensile element thereof that primarily has the function of confining and guiding the transverse element components. Typically, the endless tensile element is composed of two sets of a number of mutually nested, i.e. radially stacked flat and thin metal rings.

In the known transmission, a driving power is transferred from one pulley thereof by means of the drive belt that is arranged between and around the pulleys, while being clamped between two conical discs of each pulley. At least one such pulley disc of each pulley is provided axially moveable relative to the respective other one pulley disc on a shaft of the pulley by means of an actuator thereof. As a result, the drive belt, and in particular the transverse element components thereof, can be clamped between the pulley discs of both pulleys such that a rotation of a first or driving pulley is transferred to the second or driven pulley via the drive belt. The transfer of the driving power between each pulley and the drive belt takes place by means of friction, whereto the transverse elements on either lateral, i.e. axial side thereof are provided with a contact face for arriving into contact with a pulley disc. The contact faces of a transverse element are mutually oriented at an acute angle that essentially matches the angle of the V-shaped groove defined by and between the conical discs of each pulley. Typically, the contact faces are provided with low lying areas, such as grooves or holes for receiving a lubricating and/or cooling fluid that is typically applied in the known transmission and that is forced out from in-between the (higher) parts of the contact faces and the pulley discs that arrive in physical friction contact during operation of the transmission.

It is imperative for the proper functioning and durability of the transmission that the transverse elements are very strong, as well as fatigue and wear resistant. In particular, the contact faces of the transverse elements are subject to wear, due to the heavily loaded sliding contact thereof with the pulley discs. For limiting a wear rate of these contact faces to a level that is suitable or least acceptable in the typical automotive application of the transmission, it is known to provide the transverse elements with a material hardness of at least 58 on the Rockwell hardness C-scale (HRC). This hardness value is realized by producing the transverse elements from a carbon containing steel base material and by quench hardening the steel as part of the production process of the transverse elements. An example of such a known production process is provided by the European patent publication EP-A-1 233 207. The carbon content of the steel base material normally lies in the range between 0.6 and 1.0 % by weight (wt.%). For example, 75Cr1 steel is often used as the base material for the transverse elements.

A further example of the known production process of transverse elements is provided by the international patent publication WO2009/084946 A1 that also mentions 75Cr1 as the base material for transverse elements, as well as the quench hardening thereof by austenizing, quenching and tempering.

The conventional quench hardening process includes the steps of heating the steel to a high temperature (e.g. of over 750 °C) for transforming the microstructure thereof from ferrite into austenite, i.e. of austenitizing, and of subsequent rapid cooling for transforming the austenite into martensite, i.e. of quenching. Thereafter, the steel is typically subjected to the further process step of tempering, i.e. of heating the steel to a moderate temperature (e.g. of around 200 °C) to decrease brittleness and/or to increase ductility for bringing the fatigue properties of the quench hardened steel to the required level. As a result of tempering process step also the hardness is reduced as compared to the hardness value immediately after the process step of quenching. The thus hardened steel has a microstructure largely composed of non-dissolved carbides, such as iron carbide (Fe₃C), in a matrix of martensite and ferrite. Some residual austenite may also be present, however, only in the small amount of less than 10 % by volume (vol.%).

The above known production process provides transverse elements having a considerable resistance against wear, as well as other material characteristics, that are eminently suitable for the automotive application of the drive belt. Still, it is an ever present desire in the art to further reduce wear and/or to further increase (fatigue) strength of the transverse elements remains ever present. On the one hand, the robustness and service life of the transmission as a whole may be improved thereby, on the other hand the driving power to be transferred thereby may be improved and/or the transmission may be miniaturized. Although, the wear resistance of the transverse element can indeed be improved further by increasing the hardness of the transverse elements, for example by fine-tuning the composition of the steel base material or the process parameters of the quench hardening process, such additional hardness is associated with an unfavorable decrease in the fatigue strength of the transverse elements. Indeed, with the above known base material and quench hardening process, a hardness value in the range from 58 HRC to 62 HRC is in practice often applied, as representing the optimum between wear resistance and fatigue strength.

The present invention aims to provide transverse elements with an improved wear resistance, while at least maintaining their (fatigue) strength. According to the invention such is realized by providing the transverse elements with a microstructure that, at least within 100 micron (µm) from the contact faces thereof, includes the considerable amount of austenite of more than 25 vol.%. In particular according to the invention, the said amount of austenite is preferably highest at the contact faces where it has a value between 50 vol.% and 75 vol.%. The said amount of austenite reduces gradually towards the inside of the transverse element, for instance, to between 10 vol.% and 40 vol.% at 1 mm from the contact faces.

It was found by experiment that such comparatively high amount of residual austenite in the contact faces the wear resistance of the transverse elements could be significantly improved. More in particular, it was found that the transverse elements according to the invention could be provided with an increased material hardness of over 62 HRC up to 64 HRC or even somewhat higher, favorably without any decrease in the fatigue strength thereof.

In a more detailed embodiment of the invention, the transverse elements are provided with such additional material hardness at their surface in a case hardening process such as nitriding or carbonitriding. An advantage of these latter processes is that they can be combined with the known quench hardening process relatively easy. For example, the transverse elements may be carbonitrided by austenitizing them in an atmosphere comprising endogas (i.e. a mixture of CO/CO₂, H₂, CH₄, H₂O and N₂) and ammonia (NH₃) instead of the known inert atmosphere. The carbonitriding process also helps to form the desired micro-structure at the surface of the transverse element with the predominant austenite matrix in accordance with the invention. Particularly good results were achieved by providing the transverse elements with a diffusion layer of interstitial nitrogen atoms of over 70 micron thick, preferably up to 100 micron. Preferably, the transverse elements are also provided with a diffusion layer of interstitial carbon atoms of over 10 micron thick, preferably up to 30 micron.

The basic principles of the invention as well as a preferred embodiment thereof will now be elucidated further along a drawing in which:
Figure 1 provides a schematically depicted example of the well-known continuously variable transmission provided with two pulleys and a drive belt;
Figure 2 provides a schematically depicted section of the known drive belt incorporating transverse elements and a tensile element;
Figure 3A is a photograph of a representative example of the microstructure of the transverse element according to the invention;
Figure 3B is a photograph of the microstructure of the known transverse element;
Figure 4 is a graph illustrating the rate of wear of both the known transverse element and a representative example of the transverse element according to the invention;
Figure 5 is a graph illustrating the fatigue strength of both the known transverse element and a representative example of the transverse element according to the invention;
Figure 6 is a graph of the nitrogen and carbon content in a surface layer of the transverse Figure 4 is a graph illustrating the rate of wear of both the known transverse element and a representative example of the transverse element according to the invention;

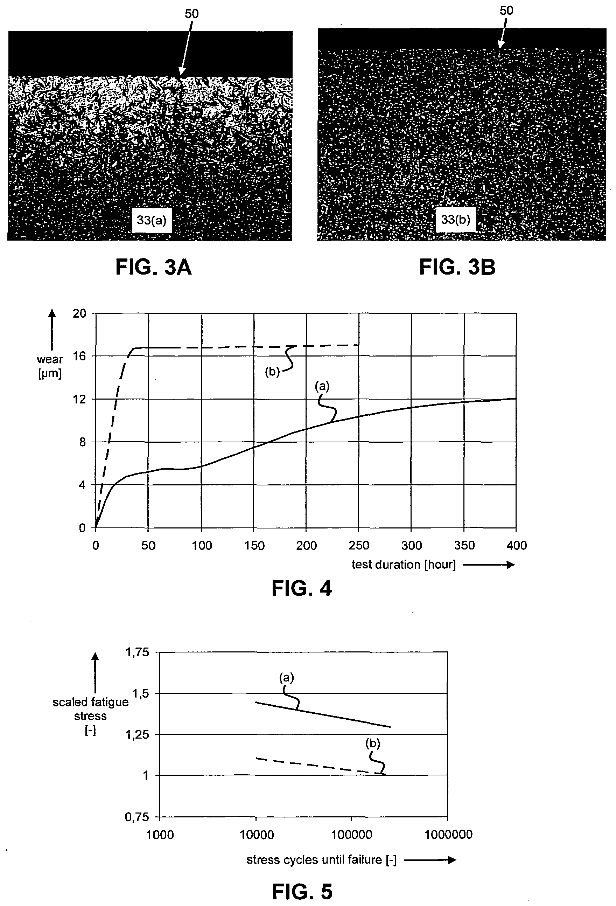

Figure 5 is a graph illustrating the fatigue strength of both the known transverse element and a representative example of the transverse element according to the invention;

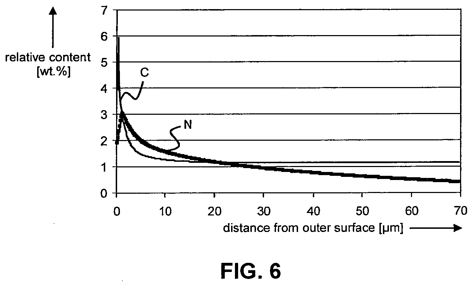

Figure 6 is a graph of the nitrogen and carbon content in a surface layer of the transverse element produced in accordance with the invention;

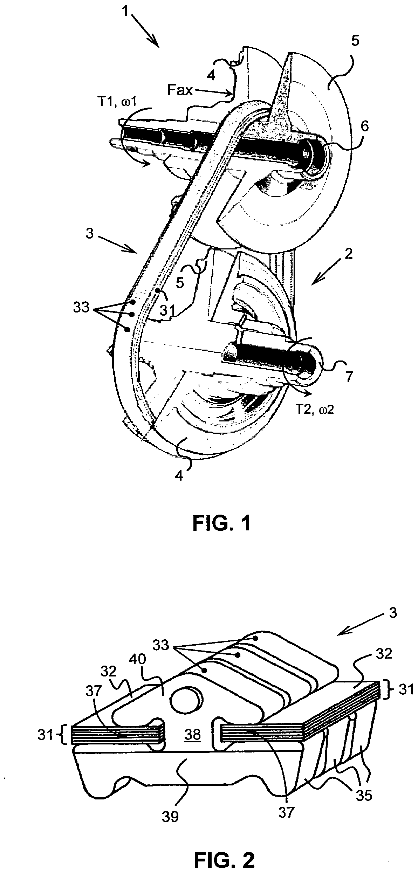

Figure 1 shows the central parts of a known continuously variable transmission or CVT that is commonly applied in the drive-line of motor vehicles between the engine and the drive wheels thereof. The transmission comprises two pulleys 1, 2, each provided with two conical pulley discs 4, 5, where between a predominantly V-shaped pulley groove is defined and whereof one disc 4 is axially moveable along a respective pulley shaft 6, 7 over which it is placed. A drive belt 3 is wrapped around the pulleys 1, 2 for transmitting a rotational movement ω and an accompanying torque T from the one pulley 1, 2 to the other 2, 1. The transmission generally also comprises activation means that impose on the said at least one disc 4 of each pulley 1, 2 an axially oriented clamping force Fax that is directed towards the other pulley disc 5 of that pulley 1,2, such that the drive belt 3 is clamped between these discs 4, 5 of the pulleys 1,2. These clamping forces also determine a speed ratio of the transmission that is defined as the ratio between the rotational speed of the driven pulley 2 and the rotational speed of the driving pulley 1 during operation.

An example of a known drive belt 3 is shown in more detail figure 2 in a section thereof, which drive belt 3 incorporates a self-contained or endless tensile element 31. In this particular example, the endless tensile element 31 is composed of two sets of flat and thin, i.e. of ribbon-like, flexible rings 32. The drive belt 3 further comprises a number of transverse elements 33 that are in contact with and held together by the tensile element 31. In this particular example, each set of rings 32 is received in a respective recess 37 defined by the transverse elements 33 on either lateral, i.e. axial side of a central or web part 38 thereof. In radial direction, the recesses 37 are located in-between an inner part 39 and an outer part 40 of the transverse element 33.

On either axial side thereof, the radially inner transverse element part 39 of the transverse elements 33 is provided with a contact face 35 for arriving into frictional contact with a pulley disc 4, 5. The contact faces 35 of each transverse element 33 are mutually oriented at an acute angle that essentially matches the angle of the V-shaped groove defined by and between the conical discs 4, 5 of each pulley 1,2. Thus, the transverse elements 33 take-up the said clamping force Fax, such when an input torque Tin is exerted on the so-called driving pulley 1, friction between the discs 4, 5 and the belt 3, causes a rotation of the driving pulley 1 to be transferred to the so-called driven pulley 2 via the likewise rotating drive belt 3.

During operation in the CVT the transverse element 33 components of the drive belt 3 are intermittedly clamped between and arrive in sliding, frictional contact with the pulley discs 4, 5 of the pulleys 1, 2. As a result, the transverse elements 33 are subject to wear and metal fatigue. Therefore, it has been a general development aim in the art to improve these two material properties. Generally speaking, the wear resistance of the transverse elements 33 can be improved by increasing the material hardness thereof, however, at the expense of a reduction in the fatigue strength thereof. Hence, in practice a status-quo compromise between the said material properties has been reached for several years now, by using carbon containing steel as the base material for the transverse elements 33 and, as part of the manufacturing process thereof, subjecting the (semi-finished) transverse elements 33 to quench hardening and tempering to realize a end-product hardness value in the range between 58 HRC and 62 HRC.

The present invention sets a new standard in the above respect. According to the invention the wear resistance of the transverse elements 33 may be substantially improved without detriment to the fatigue strength thereof, by providing these with a surface layer having a microstructure that includes a considerable amount of (residual) austenite, as is illustrated in figure 3A.

Figure 3A represents a 100 times enlarged photograph of an etched and polished cross-section of the novel transverse element 33(a) according to the invention. In accordance with the invention, the novel transverse element 33(a) is provided with a surface layer having a microstructure including white areas of (residual) austenite phase. At the outer surface 50 of the material the matrix is, in this example, for about 70 vol.% composed of austenite. The remaining phases are martensite and ferrite that are represented by the darker areas in figure 3A. In a direction away from the outer surface 50 into the material of the novel transverse element 33(a) the austenite fraction decreases, whereas the martensite and ferrite fraction increases. in the bulk material of the novel transverse element 33(a), i.e. at over 1 mm from the outer surface 50 thereof, the austenite fraction is more or less constant at about 15% in this example. The material also comprises white, more or less smoothly rounded particles of non-dissolved iron carbide.

For comparison the microstructure of the conventional transverse element 33(b) is shown in figure 3B, likewise by way of a 100 times enlarged photograph of an etched and polished cross-section thereof. The photograph shows a more or less continuous microstructure towards the outer surface 50 of the conventional transverse element 33(b), which microstructure is predominantly composed of white, largely spherically shaped particles of non-dissolved iron carbide in a matrix of darker martensite and ferrite. As mentioned hereinabove, the conventional transverse element 33(b) is produced from a quench hardened 75Cr1 steel base material.

Surprisingly, as a result of the high fraction of austenite, the Vickers surface hardness, i.e. HV0.1, of the novel transverse element 33(a) may even by slightly less than that of the conventional transverse element 33(b), even though the hardness of its core material will typically be higher, i.e. have a value in the range between 62 HRC and 64 HRC in stead of in the conventional range between 58 HRC and 62 HRC. Still, as is apparent from the wear graph of figure 4 wherein the wear, i.e. loss of surface layer material in micron in a sliding/abrasive wear test is plotted against the test duration in hour, a rate of wear of the novel transverse element 33(a), as represented by curve (a), is considerably less than that of the conventional transverse element 33(b), as represented by curve (b). Further, the novel transverse element 33(a) also exhibits considerably more favorable metal fatigue properties, as is apparent from the fatigue graph of figure 5 wherein the "S-N" (force or stress S vs. load cycles N until failure) or "Wohler" curves (a) and (b) of the novel transverse element 33(a) and the conventional transverse element 33(b) respectively are plotted. In the graph of figure 5 the Y-axis, which represents the maximum stress level S of the fatigue stress cycle that causes the test object to fail (i.e. the fatigue limit), has been scaled to the stress level S until failure at 250.000 stress cycles of the conventional transverse element 33(b). It thus follows from figure 5 that the novel transverse element 33(a) represents an improvement in fatigue strength by about a factor of 1,3 relative to the conventional transverse element 33(b).

Thus, by the application of the novel transverse element 33(a), the durability of the drive belt 3 is improved and/or its load carrying capacity, in terms of the maximum driving power to be transferred thereby, is increased.

According to the invention, the novel transverse element 33(a) of figure 3A may be favorably produced from the conventionally applied steel base material, such as 75Cr1 by subjecting it to a combined process of quench hardening and carbonitriding. In this process the transverse element 33(a) is austenitized, i.e. is heated to and kept at a temperature of over 750 °C in an atmosphere comprising endogas (i.e. a mixture of CO/CO₂, H₂, CH₄, H₂O and N₂) and ammonia (NH₃) instead of the inert atmosphere of conventional quench hardening. According to the invention good results are achieved by austenitizing the transverse elements 33(a) at a temperature of 780 °C up to 900 °C for 1 hour up to 10 hours in an atmosphere comprising between 20 vol.% and 25 vol.% carbon-monoxide (CO), between 30 vol.% and 45 vol.% hydrogen (H₂) and between 1 vol.% to 10 vol.% ammonia (NH₃) with balance nitrogen (N₂). More in particular, according to the invention, the above parameters of the combined quench hardening and carbonitriding process are calibrated to impart the novel transverse elements 33(a) with a diffusion layer of interstitial nitrogen atoms of over 70 micron thick, preferably up to 100 micron and with diffusion layer of interstitial carbon atoms of over 10 micron thick, preferably up to 30 micron, e.g. as indicated in the graph of figure 6. In figure 6 the relative local nitrogen "N" and carbon "C" content in a surface layer of the novel transverse element 33(a) are plotted in relation to a distance from the outer surface 50 thereof. Preferably, the maximum relative content of nitrogen in the diffusion layer is between 1.5 wt.% and 4 wt.% and the maximum relative content of carbon is between 4 and 8 wt.%. As appears from figure 6, such maximum occurs in both cases at only a few microns from the outer surface 50.

## Claims

1. A steel transverse element (33) for a drive belt (3) with an endless tensile element (31) and a number of the transverse elements (33) slideably provided thereon for the transfer of a driving power between two pulleys (1, 2), which transverse element (33) is provided with a recess (37) for receiving the tensile element (31) and with an inner part (39) that is located in radial direction inside the tensile element (31) and that on either side thereof provided with a contact surface (35) for frictional contact with the pulleys (1, 2), **characterized in that**, at the location of the contact surface (35) a microstructure of the transverse element (33) includes at least 50 volume percent and at most 75 volume percent of austenite.

2. The steel transverse element (33) according to claim 1, **characterized in that**, at the location of the contact surface (35) and at a depth of 100 micron as measured perpendicular to the outer (contact) surface (50; 35) of the transverse element (33) the austenite volume fraction amounts to at least 25 %.

3. The steel transverse element (33) according to claim 2, **characterized in that**, the bulk material of the transverse element starting at the depth of least 1 millimeter is provided with a microstructure that includes at least 10 volume percent and at most 40 volume percent austenite.

4. The steel transverse element (33) according to any one of the preceding claims, **characterized in that**, the transverse element (33) is provided with a material hardness of at least between 62 HRC and 64 HRC.

5. The steel transverse element (33) according to any one of the preceding claims, **characterized in that**, the transverse element (33) is provided with a surface layer of at least 70 micron thickness that is enriched with nitrogen.

6. The steel transverse element (33) according to any one of the preceding claims, **characterized in that**, the transverse element (33) is provided with a surface layer of at least 70 micron thickness that is enriched with carbon.

7. The steel transverse element (33) according to any one of the preceding claims, **characterized in that**, the transverse element (33) is produced from steel with a carbon content having a value in the range between 0.6 and 1.0 % by weight (wt.%), preferably DIN 75Cr1 steel.

8. Drive belt (3) with an endless tensile element (31) and a number of the transverse elements (33) slideably provided thereon according to any one of the preceding claims for the transfer of a driving power between two pulleys (1, 2).

## Patentansprüche

1. Stahl-Querelement (33) für einen Antriebsriemen (3) mit einem endlosen Zugelement (31) und mehreren der Querelemente (33), die verschiebbar darauf bereitgestellt sind, zur Übertragung einer Antriebskraft zwischen zwei Riemenscheiben (1, 2), wobei das Querelement (33) eine Vertiefung (37) zum Aufnehmen des Zugelements (31) und einen inneren Teil (39) aufweist, der in radialer Richtung innerhalb des Zugelements (31) angeordnet ist und der an beiden Seiten davon eine Kontaktfläche (35) zum Reibungskontakt mit den Riemenscheiben (1, 2) aufweist, **dadurch gekennzeichnet, dass** an der Stelle der Kontaktfläche (35) eine Mikrostruktur des Querelements (33) wenigstens 50 Volumenprozent und höchstens 75 Volumenprozent Austenit enthält.

2. Stahl-Querelement (33) gemäß Anspruch 1, **dadurch gekennzeichnet, dass** an der Stelle der Kontaktfläche (35) und in einer Tiefe von 100 Mikrometer, wie gemessen senkrecht zu der Außen(kontakt)fläche (50; 35) des Querelements (33), der Austenit-Volumenanteil wenigstens 25 % beträgt.

3. Stahl-Querelement (33) gemäß Anspruch 2, **dadurch gekennzeichnet, dass** das Massivmaterial des Querelements beginnend in der Tiefe von wenigstens 1 Millimeter eine Mikrostruktur aufweist, die wenigstens 10 Volumenprozent und höchstens 40 Volumenprozent Austenit enthält.

4. Stahl-Querelement (33) gemäß einem der vorstehenden Ansprüche, **dadurch gekennzeichnet, dass** das Querelement (33) eine Materialhärte von wenigstens zwischen 62 HRC und 64 HRC aufweist.

5. Stahl-Querelement (33) gemäß einem der vorstehenden Ansprüche, **dadurch gekennzeichnet, dass** das Querelement (33) eine Oberflächenschicht mit einer Dicke von wenigstens 70 Mikrometer, die mit Stickstoff angereichert ist, aufweist.

6. Stahl-Querelement (33) gemäß einem der vorstehenden Ansprüche, **dadurch gekennzeichnet, dass** das Querelement (33) eine Oberflächenschicht mit einer Dicke von wenigstens 70 Mikrometer, die mit Kohlenstoff angereichert ist, aufweist.

7. Stahl-Querelement (33) gemäß einem der vorstehenden Ansprüche, **dadurch gekennzeichnet, dass** das Querelement (33) aus einem Stahl mit einem Kohlenstoffgehalt mit einem Wert in dem Bereich zwischen 0,6 und 1,0 Gewichts-% (Gew.-%), vorzugsweise DIN-75Cr1-Stahl, hergestellt ist.

8. Antriebsriemen (3) mit einem endlosen Zugelement (31) und mehreren der Querelemente (33) gemäß einem der vorstehenden Ansprüche, die verschiebbar darauf angeordnet sind, zur Übertragung einer Antriebskraft zwischen zwei Riemenscheiben (1, 2).

## Revendications

1. Élément transversal en acier (33) pour une courroie d'entraînement (3) dotée d'un élément sans fin en tension (31) et d'un certain nombre des éléments transversaux (33) disposés de manière coulissante sur celui-ci pour le transfert d'une énergie d'entraînement entre deux poulies (1, 2), lequel élément transversal (33) est pourvu d'un renfoncement (37) destiné à recevoir l'élément en tension (31) et d'une partie interne (39) qui est située dans une direction radiale à l'intérieur de l'élément en tension (31) et qui sur l'un ou l'autre de ses côtés est pourvue d'une surface de contact (35) pour le contact de frottement avec les poulies (1, 2), **caractérisé en ce que**, à l'endroit de la surface de contact (35) une microstructure de l'élément transversal (33) comprend au moins 50 pour cent en volume et au maximum 75 pour cent en volume d'austénite.

2. Élément transversal en acier (33) selon la revendication 1, **caractérisé en ce que**, à l'endroit de la surface de contact (35) et à une profondeur de 100 micromètres telle que mesurée perpendiculairement à la surface (de contact) externe (50 ; 35) de l'élément transversal (33) la fraction volumique d'austénite s'élève à au moins 25 %.

3. Élément transversal en acier (33) selon la revendication 2, **caractérisé en ce que** le matériau de la masse de l'élément transversal à partir de la profondeur d'au moins 1 millimètre est pourvue d'une microstructure qui comprend au moins 10 pour cent en volume et au maximum 40 pour cent en volume d'austénite.

4. Élément transversal en acier (33) selon l'une quelconque des revendications précédentes, **caractérisé en ce que** l'élément transversal (33) est pourvu d'une dureté de matériau au moins comprise entre 62 HRC et 64 HRC.

5. Élément transversal en acier (33) selon l'une quelconque des revendications précédentes, **caractérisé en ce que** l'élément transversal (33) est pourvu d'une couche de surface d'au moins 70 micromètres d'épaisseur qui est enrichie en azote.

6. Élément transversal en acier (33) selon l'une quelconque des revendications précédentes, **caractérisé en ce que** l'élément transversal (33) est pourvu d'une couche de surface d'au moins 70 micromètres d'épaisseur qui est enrichie en carbone.

7. Élément transversal en acier (33) selon l'une quelconque des revendications précédentes, **caractérisé en ce que** l'élément transversal (33) est produit à partir d'acier doté d'une teneur en carbone ayant une valeur dans la plage comprise entre 0,6 et 1,0 % en poids (% en poids), de préférence d'acier DIN 75Cr1.

8. Courroie d'entraînement (3) dotée d'un élément sans fin en tension (31) et d'un certain nombre des éléments transversaux (33) selon l'une quelconque des revendications précédentes disposés de manière coulissante sur celui-ci pour le transfert d'une énergie d'entraînement entre deux poulies (1, 2).
